(19) Europäisches Patentamt
European Patent Office
Office européen des brevets

(11) **EP 1 756 748 B1**

(12) **EUROPÄISCHE PATENTSCHRIFT**

(45) Veröffentlichungstag und Bekanntmachung des Hinweises auf die Patenterteilung:
**05.03.2008 Patentblatt 2008/10**

(21) Anmeldenummer: **04804730.2**

(22) Anmeldetag: **08.12.2004**

(51) Int Cl.:
*G06K 9/00* *(2006.01)*     *B60R 21/01* *(2006.01)*
*G06T 7/00* *(2006.01)*

(86) Internationale Anmeldenummer:
**PCT/EP2004/053350**

(87) Internationale Veröffentlichungsnummer:
**WO 2005/081176 (01.09.2005 Gazette 2005/35)**

(54) **VERFAHREN ZUR KLASSIFIZIERUNG EINES OBJEKTS MIT EINER STEREOKAMERA**

METHOD FOR THE CLASSIFICATION OF AN OBJECT BY MEANS OF A STEREO CAMERA

PROCEDE POUR CLASSER UN OBJET AU MOYEN D'UNE CAMERA STEREO

(84) Benannte Vertragsstaaten:
**DE ES FR GB SE**

(30) Priorität: **13.02.2004 DE 102004007049**

(43) Veröffentlichungstag der Anmeldung:
**28.02.2007 Patentblatt 2007/09**

(73) Patentinhaber: **ROBERT BOSCH GMBH**
**70442 Stuttgart (DE)**

(72) Erfinder:
• **ENGELBERG, Thomas**
**31137 Hildesheim (DE)**
• **NIEM, Wolfgang**
**31141 Hildesheim (DE)**

(56) Entgegenhaltungen:
**EP-A- 0 689 167**     **DE-A1- 19 932 520**

• **DEVY M ET AL: "Detection and classification of passenger seat occupancy using stereovision" INTELLIGENT VEHICLES SYMPOSIUM, 2000. IV 2000. PROCEEDINGS OF THE IEEE DEARBORN, MI, USA 3-5 OCT. 2000, PISCATAWAY, NJ, USA, IEEE, US, 3. Oktober 2000 (2000-10-03), Seiten 714-719, XP010529022 ISBN: 0-7803-6363-9**

**Beschreibung**

Stand der Technik

Die Erfindung geht aus von einem Verfahren zur Klassifizierung eines Objekts mit einer Stereokamera nach der Gattung des unabhängigen Patentanspruchs.
Aus DE 199 32 520 A1 ist eine Klassifizierung mittels einer Stereokamera eines Objekts bekannt, bei der die Klassifizierung anhand der Kopfgröße bzw. der Form des Kopfes durchgeführt wird.

Vorteile der Erfindung

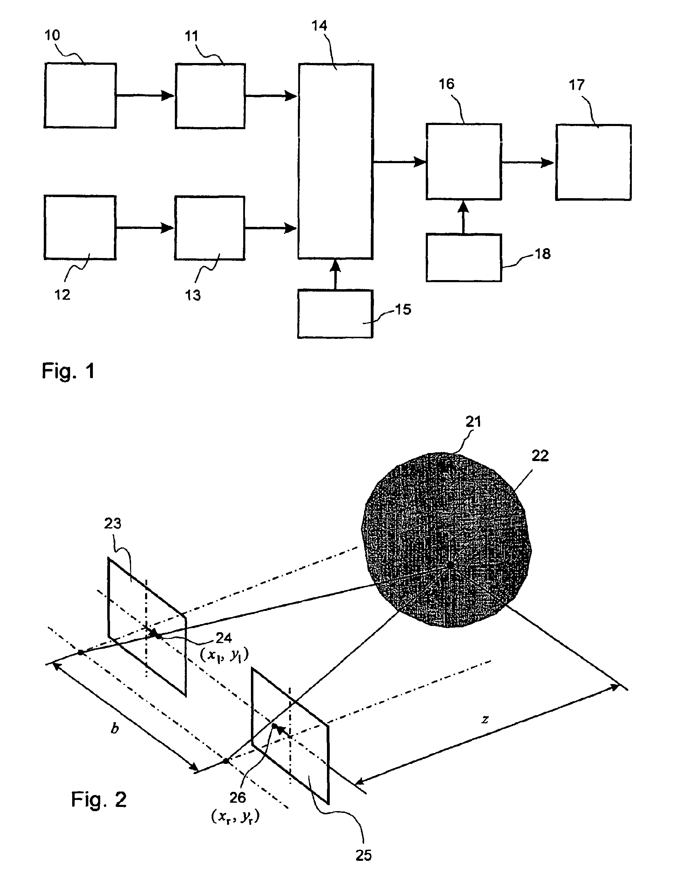

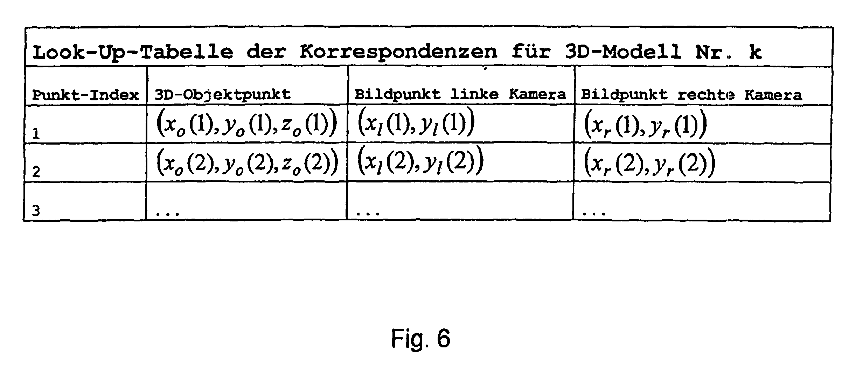

Das erfindungsgemäße Verfahren zur Klassifizierung eines Objekts mit einem Stereokamera mit den Merkmalen des unabhängigen Patentanspruchs hat demgegenüber den Vorteil, dass nunmehr eine modellbasierte Klassifizierung anhand von tabellarisch abgespeicherten Bildpunkt-Koordinaten des linken und rechten Videosensors der Stereokamera sowie ihre Korrespondenzen zueinander durchgeführt wird. Die Modelle sind für verschiedene Objekt-Formen abgelegt und für verschiedene Abstände des Objekts zum Stereo-Kamerasystem. Befindet sich ein zu klassifizierendes Objekt in seiner räumlichen Lage zwischen zwei derart abgespeicherten Modellen, dann wird dasjenige Modell zur Klassifizierung herangezogen, das dem Objekt am nächsten kommt. Durch die Verwendung der abgespeicherten Bildpunkt-Koordinaten des linken und rechten Videosensors der Stereokamera sowie ihre Korrespondenzen zueinander ist es möglich, allein aus Grauwert- oder Farbbildern die Klassifizierung dreidimensionaler Objekte durchzuführen. Hierbei ergibt sich gegenüber dem Stand der Technik der wesentliche Vorteil, dass die aufwändige und fehleranfällige Disparitäts- und Tiefenwert-Schätzung entfällt. Damit wird das erfindungsgemäße Verfahren erheblich einfacher. Insbesondere kann dabei eine weniger anspruchsvolle Hardware verwendet werden. Darüber hinaus ist die Klassifizierung weniger rechenintensiv. Auch ist das Klassifizierungsverfahren äußerst robust hinsichtlich der Identifikation des dreidimensionalen Objekts. Das erfindungsgemäße Verfahren kann insbesondere bei der videobasierten Klassifizierung der Sitzbelegung in einem Fahrzeug verwendet werden. Eine weitere Anwendungsmöglichkeit besteht in Fertigungsprozessen, um Werkstücke zu identifizieren.
Die Grundidee ist, für jedes zu klassifizierende Objekt ein entsprechendes Modell bereitzustellen. Das Modell ist durch 3D-Punkte sowie ihre topologische Verknüpfung (z.B. triangulierte Oberfläche) gekennzeichnet, wobei die für das Kamerasystem sichtbaren 3D-Punkte 22 in entsprechende Bildpunkt-Koordinaten 24 im linken Kamerabild 23 und Bildpunkt-Koordinaten 26 rechten Kamerabild 25 des Stereosystems zueinander abgebildet werden; siehe Figur 2. Das gesamte Modell mit seinen 3D-Modellpunkten sowie den zugehörigen Bildpunkt-Koordinaten des linken und rechten Videosensors wird in einer Tabelle gemäß Figur 6 so abgespeichert (z.B. zeilenweise), dass die Korrespondenz der Bildpunkte von linker und rechter Kamera eindeutig ist. Diese Abspeicherung kann in Form einer Look-Up-Tabelle derart erfolgen, dass ein schneller Zugriff auf die Daten realisiert werden kann. Die aufgenommenen Grauwerte der linken und rechten Kamera werden in einer definierten Umgebung um die jeweiligen abgespeicherten korrespondierenden Bildpunkt-Koordinaten verglichen. In Abhängigkeit dieses Vergleiches erfolgt die Klassifizierung. Es wird dann das Modell genommen, für dessen Werte sich im Vergleich die höchste Übereinstimmung ergibt.
Durch die in den abhängigen Ansprüchen aufgeführten Maßnahmen und Weiterbildungen sind vorteilhafte Verbesserungen des im unabhängigen Patentspruch angegebenen Verfahrens zur Klassifizierung eines Objekts mit einer Stereokamera möglich.
Besonders vorteilhaft ist, dass für die einzelnen Vergleiche jeweils ein Gütemaß ermittelt wird, wobei das Objekt in Abhängigkeit von diesem Gütemaß klassifiziert wird. Das Gütemaß kann vorteilhafter Weise aus geeigneten Korrelationsmaßen (z.B. Korrelationskoeffizient) abgeleitet werden.
Weiterhin ist es von Vorteil, dass die Modelle für eine Form, beispielsweise ein Ellipsoid, für unterschiedliche Lagen oder Abstände zum Kamerasystem erzeugt werden. Beispielsweise genügen für die richtige Klassifizierung eines Objekts auf einem Fahrzeugsitz im Regelfall drei unterschiedliche Abstände zum Kamerasystem. Auch unterschiedliche Orientierungen des Objekts können so ausreichend berücksichtigt werden. Gegebenenfalls sind hier noch zusätzlich geeignete Abgleichverfahren anwendbar.

Zeichnung

Ausführungsbeispiele der Erfindung sind in der Zeichnung dargestellt und werden in der nachfolgenden Beschreibung näher erläutert.
Es zeigen

Figur 1      ein Blockschaltbild einer Vorrichtung für das erfindungsgemäße Verfahren,
Figur 2      eine Abbildung von Punkten eines dreidimensionalen Objekts in die Bildebenen von zwei Videosensoren einer Stereokamera,
Figur 3      ein weiteres Blockschaltbild der Vorrichtung,
Figur 4      ein weiteres Blockschaltbild der Vorrichtung,
Figur 5      ein weiteres Blockschaltbild der Vorrichtung,
Figur 6      eine Tabelle und
Figur 7      ein weiteres Blockschaltbild der Vorrichtung.

Beschreibung

Bereits zum Stand der Technik zählende Verfahren zur modellbasierten dreidimensionalen Objektklassifizierung mit einer Stereokamera lassen sich im allgemeinen in drei Hauptbearbeitungsschritte untergliedern.

In einem ersten Schritt wird aus einem Stereobildpaar mittels Disparitätsschätzung für ausgewählte Bildpunkte eine Verschiebung geschätzt, die direkt in Tiefenwerte bzw. eine 3D-Punktewolke umgerechnet wird. Dies ist das Stereoprinzip.

In einem zweiten Schritt wird diese 3D-Punktewolke mit verschiedenen 3D-Objektmodellen verglichen, die durch eine Objektflächenbeschreibung repräsentiert sind. Als Maß für die Ähnlichkeit kann dabei beispielsweise der mittlere Abstand der 3D-Punkte von dem jeweiligen Oberflächenmodell bestimmt werden.

Die Zuordnung zu einer Klasse in einem dritten Schritt erfolgt über die Auswahl desjenigen Objektmodells, das die größte Ähnlichkeit besitzt.

Um die Bestimmung der Tiefenwerte zu vermeiden, wird nunmehr erfindungsgemäß vorgeschlagen, die Klassifizierung allein anhand des Vergleichs der gemessenen Grauwert- oder Farbbilder (=Bilder) mit gespeicherten Bildpunkt-Koordinaten der linken und rechten Kamera des Stereosystems sowie ihrer Korrespondenzen zueinander durchzuführen. Die gespeicherten Bildpunkt-Koordinaten ergeben sich aus der Abbildung der Oberflächen von 3D-Modellen, welche die zu klassifizierenden Objekte repräsentieren, in das linke und rechte Kamerabild des Stereosystems. Die Klassifizierung von Objekten in verschiedenen Lagen und Abständen im Bezug zum Stereo-Kamerasystem wird dadurch möglich, dass auch die zugehörigen Modelle, die die jeweiligen Objekte repräsentieren, in verschiedenen Lagen und Abständen vorhanden sind. Soll beispielsweise ein Objekt in Form eines Ellipsoids, dessen Abstand zum Stereo-Kamerasystem variieren kann, klassifiziert werden, so wird auch das entsprechende Modell des Ellipsoids für mehrere Abstände zum Stereo-Kamerasystem bereitgestellt.

Für das erfindungsgemäße Klassifizierungsverfahren müssen in einem Vorverarbeitungsschritt zunächst die Modelle, die die zu klassifizierenden Objekte repräsentieren, bereitgestellt werden. Dies wird, wenn das erfindungsgemäße Verfahren zum Beispiel zur Klassifizierung der Sitzbelegung im Fahrzeug eingesetzt werden soll, bereits werksseitig vorgenommen. Dabei werden verschiedene Formen, die klassifiziert werden sollen, wie zum Beispiel Kind im Kindersitz, Kind, kleiner Erwachsener, großer Erwachsener oder auch nur ein Kopf eines Erwachsenen, ein Kopf eines Kindes zur Modellbildung herangezogen. Für diese Modelle, die auch in verschiedenen, definierten Abständen zum Stereosystem plaziert werden können, werden dann die Bildpunkt-Koordinaten der linken und der rechten Kamera des Stereosystems sowie ihrer Korrespondenzen zueinander geeignet abgespeichert (z.B. in Form einer Look-Up-Tabelle). Die Verwendung einer Look-Up-Tabelle ermöglicht eine einfache, wenig rechenintensive Suche nach demjenigen Modell, das am besten mit dem vom Stereo-Kamerasystem erfassten Objekt übereinstimmt.

Figur 1 veranschaulicht eine Vorrichtung, die zur Realisierung des erfindungsgemäßen Verfahrens eingesetzt wird. Eine Stereokamera, die aus zwei Videosensoren 10 und 12 besteht, wird zur Aufnahme des Objekts verwendet. Dem Videosensor 10 ist eine Signalverarbeitung 11 nachgeschaltet, in welcher die Messwerte verstärkt, gefiltert und gegebenenfalls digitalisiert werden. Dies führt auch die Signalverarbeitung 13 für den Videosensor 12 durch. Bei den Videosensoren 10 und 12 kann es sich beispielsweise um CCD- oder eine CMOS-Kameras handeln, die auch im Infrarotbereich funktionieren. Wird im Infrarotbereich gearbeitet, dann kann auch eine Infrarotbeleuchtung vorgesehen sein.

Eine Recheneinheit 14, die in einem Steuergerät für die Stereokamera vorgesehen ist, verarbeitet dann gemäß dem erfindungsgemäßen Verfahren die Daten der Videosensoren 10 und 12, um das erkannte Objekt zu klassifizieren. Dazu greift die Recheneinheit 14 auf einen Speicher 15 zu. Im Speicher 15, beispielsweise einer Datenbank, sind die einzelnen Modelle, die durch ihre Bildpunkt-Koordinaten sowie ihre Korrespondenzen zueinander gekennzeichnet sind, abgelegt. Mit Hilfe der Recheneinheit 14 wird also dasjenige Modell gesucht, das mit dem gemessenen Objekt die höchste Übereinstimmung aufweist. Die Ausgangsgröße der Recheneinheit 14 ist das Klassifizierungsergebnis, das beispielsweise an ein Steuergerät für Rückhaltemittel 16 übertragen wird, so dass das Steuergerät 16 in Abhängigkeit von dieser Klassifizierung und weiteren Sensorwerten einer Sensorik 18, beispielsweise einer Crashsensorik, die Rückhaltemittel 17 (z.B. Airbags, Gurtstraffer und/ oder Überrollbügel) ansteuert.

Figur 2 veranschaulicht in einem Diagramm, wie die Oberflächenpunkte eines dreidimensionalen Modells, das ein zu klassifizierendes Objekt repräsentiert, in die Bildebenen der beiden Videosensoren 10 und 12 abgebildet werden. Hier ist exemplarisch ein Modell 21 abgebildet, das einen Ellipsoid darstellt. Das Modell 21 befindet sich in einem definierten Abstand zu den Videosensoren 10 und 12. Die für die Videosensoren 10 und 12 sichtbaren Modellpunkte werden jeweils in die Bildebenen 23 und 25 der Videosensoren 10 und 12 abgebildet. Exemplarisch ist dies für den Modellpunkt 22 dargestellt, der den Abstand z zu den Bildebenen 23 und 25 aufweist. In der Bildebene 25 des rechten Videosensors führt der Modellpunkt 22 zum Bildpunkt 26 mit den Bildpunkt-Koordinaten $x_r$ und $y_r$, wobei der Ursprung der Mittelpunkt des Videosensors ist. Der linke Videosensor weist einen Bildpunkt 24 für den Modellpunkt 22 mit den Bildpunkt-Koordinaten $x_1$ und $y_1$ auf. Die beiden korrespondierenden Bildpunkte 24 und 26, die zum Modellpunkt 22 gehören, sind um die Disparität D gegeneinander verschoben. D berechnet sich nach der Gleichung

$$D = x_1 - x_r.$$

Aus geometrischen Überlegungen ergibt sich die Disparität zu D = C/z, wobei die Konstante C von der Geometrie der Stereokamera abhängt. Der Abstand z des Modellpunkts 22 zur Bildebene 25 bzw. 23 ist im vorliegenden Fall bekannt, da das dreidimensionale Modell 21 in einer vorgegebenen Lage und Ausrichtung zur Stereokamera angeordnet ist.

Für jedes dreidimensionale Modell, das eine zu klassifizierende Situation beschreibt, werden in einem einalig durchzuführenden Vorverarbeitungsschritt für diejenigen Modellpunkte, die für die Videosensoren 10 und 12 sichtbar sind, jeweils die Bildpunkt-Koordinaten und deren Korrespondenzen zueinander bestimmt und in der Look-Up-Tabelle der Korrespondenzen gespeichert.

Die Klassifizierung wird durchgeführt, indem die Grauwertverteilungen in einem definierten Bildbereich um die korrespondierende Bildpunkt-Koordinaten im linken und rechten Kamerabild der Stereokamera, die das zu klassifizierende Objekt erfasst, verglichen werden. Dies ist auch für Farbwertverteilungen anwendbar.

Der Vergleich liefert für jedes dreidimensionale Modell ein Gütemaß, das angibt, wie gut dieses dreidimensionale Modell zum gemessenen linken und rechten Kamerabild passt. Das Klassifizierungsergebnis resultiert dann aus dem dreidimensionalen Modell mit dem besten Gütemaß, das die Messung am besten beschreibt.

Das Gütemaß kann mit Signalverarbeitungsverfahren, wie zum Beispiel mit Korrelationsverfahren, ermittelt werden. Abweichungen der Position und der Orientierung der dreidimensionalen Modelle zum Messobjekt können beispielsweise mit Hilfe von iterativen Abgleichverfahren berücksichtigt werden, sofern nicht für jede mögliche Position und Lage des Messobjekts ein entsprechendes dreidimensionales Modell generiert werden soll.

Das Klassifizierungsverfahren lässt sich in eine Offlinevorverarbeitung und in die eigentliche Klassifizierung, die online durchgeführt wird, aufgliedern. Hiermit kann die Online-Rechenzeit deutlich reduziert werden. Prinzipiell könnte die Vorverarbeitung auch Online erfolgen, d.h. während des Betriebs der Vorrichtung. Dies geht jedoch auf Kosten der Rechenzeit und bringt in der Regel keine Vorteile.

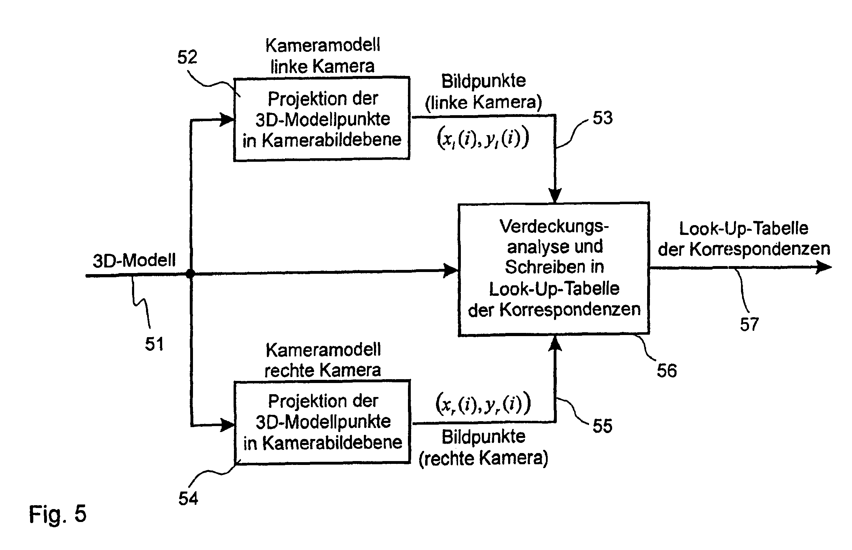

Im Rahmen der Offlineverarbeitung werden für jedes dreidimensionale Modell die Bildpunkt-Koordinaten der linken und der rechten Kamera sowie ihre Korrespondenzen bestimmt und in einer Look-Up-Tabelle gespeichert. Figur 5 zeigt dies exemplarisch für ein dreidimensionales Modell 51. Die Oberfläche eines solchen Modells kann zum Beispiel mit Hilfe eines aus Dreiecken bestehenden Netzes modelliert werden kann, wie Figur 2 exemplarisch für das Modell 21 zeigt. Gemäß Figur 5 werden die 3D-Punkte auf der Oberfläche des Modells 51 im Verfahrensschritt 52 in die Kamerabildebene der linken Kamera und im Verfahrensschritt 54 in die Kamerabildebene der rechten Kamera projeziert. Damit liegen dann die beiden korrespondierenden Bildpunkte bzw. Bildpunktemengen 53 und 55 der beiden Videosensoren 10 und 12 vor. Im Verfahrensschritt 56 werden die Bildpunktemengen 53 und 55 einer Verdeckungsanlayse unterzogen, wobei die für die Videosensoren 10 und 12 sichtbaren Punkte des Modells 51 in die Look-Up-Tabelle geschrieben zu werden. Am Ausgang 57 liegt dann die komplette Look-Up-Tabelle der Korrespondenzen für das Modell 51 vor. Die in Figur 2 exemplarisch für ein Modell 51 dargestellte Offline-Vorverarbeitung erfolgt für alle Modelle, die zu klassifizierende Objekte repräsentieren, und für verschiedene Lagen dieser Modelle im Bezug zum Stereo-Kamerasystem.

Figur 6 zeigt ein Beispiel einer Look-Up-Tabelle für ein 3D-Modell, das sich in einer definierten Lage zum Stereo-Kamerasystem befindet. Die erste Spalte enthält die Indizes der 3D-Modellpunkte, aus denen sich das Modell zusammensetzt. In der zweiten Spalte sind die Koordinaten der 3D-Modellpunkte eingetragen. Die dritte und die vierte Spalte enthalten die zugehörigen Bildpunkt-Koordinaten des linken und rechten Videosensors. Die einzelnen Modellpunkte und die korrespondierenden Bildpunkt-Koordinaten sind zeilenweise angeordnet, wobei nur die für die Videosensoren sichtbaren Modellpunkte aufgelistet sind.

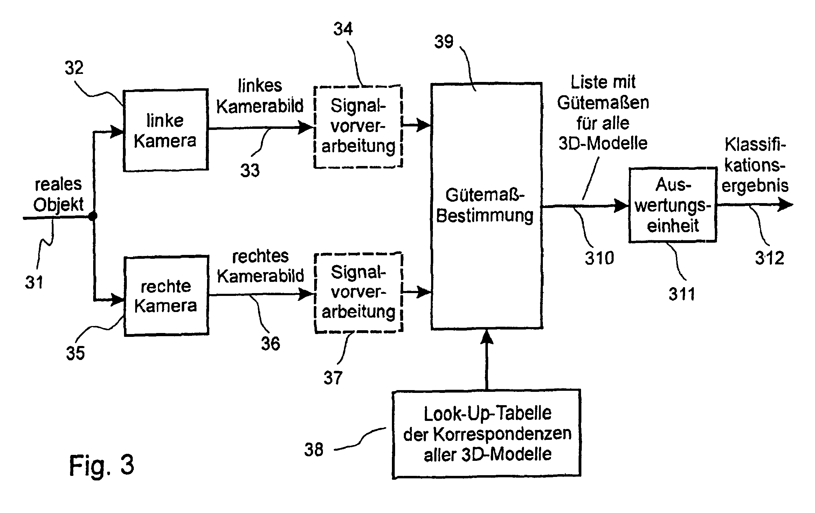

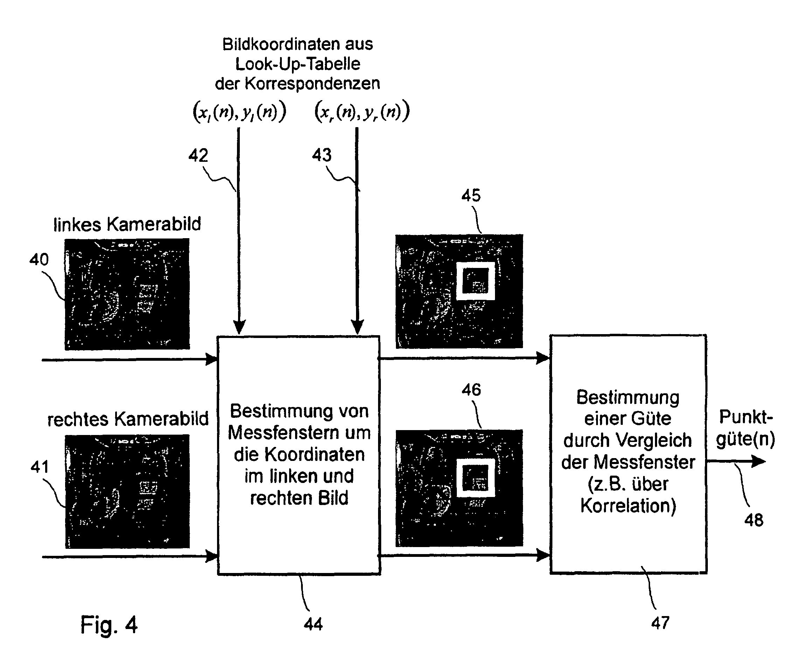

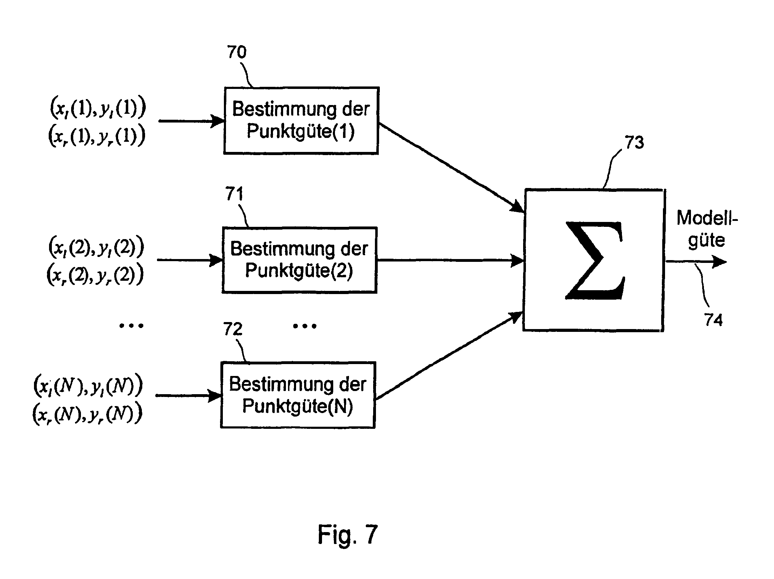

Figur 3 erläutert anhand eines Blockschaltbildes die eigentliche Klassifizierung, die online durchgeführt wird. Das reale Objekt 31 wir mit Hilfe der Videosensoren 10 und 12 aufgenommen. Im Block 32 erzeugt der linke Videosensor sein Bild 33 und im Block 35 der rechte Videosensor sein rechtes Bild 36. Die Bilder 33 und 36 werden dann in den Verfahrensschritten 34 und 37 einer Signalvorverarbeitung unterzogen. Die Signalvorverarbeitung ist beispielsweise eine Filterung der aufgenommenen Bilder 33 und 36. Im Block 39 erfolgt dann die Gütemaßbestimmung für jedes dreidimensionale Modell, das in der Look-Up-Tabelle in der Datenbank 38 abgespeichert ist. Hierfür werden die Bilder 33 und 36 in der aufbereiteten Form verwendet. Eine exemplarische Ausbildung der Gütemaßbestimmung ist in Figur 4 bzw. 7 dargestellt. Am Ausgang der Gütemaßbestimmung 39 liegt dann die Liste mit den Modellgütemaßen für alle dreidimensionalen Modelle vor. Dies ist mit den Bezugszeichen 310 bezeichnet. Die Liste wird dann im Block 311 von einer Auswerteeinheit geprüft, um das Gütemaß, das die höchste Übereinstimmung anzeigt, als Klassifizierungsergebnis im Verfahrensschritt 312 auszugeben.

Nachfolgend wird exemplarisch anhand der Figuren 4 und 7 eine Möglichkeit der Bestimmung des Gütemaßes für ein Modell beschrieben. Dieses Gütemaß wird im folgenden als Modellgüte bezeichnet. Die Modellgüten aller Modelle werden dann - wie oben bereits erläutert - zu der Liste der Modellgütemaße 310 zusammengefasst. Jedes Modell wird beschrieben durch Modellpunkte, die für die Videosensoren 10 und 12 sichtbar sind und deren korrespondierende Bildpunkt-Koordinaten des linken und rechten Videosensors 10, 12 in der Look-Up-Tabelle der Korrespondenzen abgelegt sind.

Für jeden Modellpunkt und das zugehörige korrespondierende Bildpunkt-Paar kann eine Punktgüte angegeben werden, die ausdrückt, wie gut dieses Bildpunkt-Paar zum gemessenen linken und rechten Bild passt.

Figur 4 zeigt ein Beispiel für die Bestimmung der Punktgüte für ein Bildpunkt-Koordinaten-Paar 42 und 43, das wiederum einem Modellpunkt n zugeordnet ist. Die Bildpunkt-Koordinaten 42 und 43 sind in der Look-Up-Tabelle der Korrespondenzen abgespeichert. Im Verfahrensschritt 44 werden im gemessenen Bild 40 um die Bildpunkt-Koordinaten 42 und im gemessenen rechten Bild 41 um die Bildpunkt-Koordinaten 43 jeweils Messfenster gelegt. Diese Messfenster legen im linken und rechten Bild 41 und 42 diejenigen Bereiche fest, die für die Bestimmung der Punktgüte betrachtet werden.

Diese Bereiche sind exemplarisch im linken und rechten Bild 45 und 46 eingezeichnet. Die Bilder 45 und 46 werden einem Block 47 zur Bestimmung der Güte durch Vergleich der Messfenster, beispielsweise mit Hilfe von Korrelationsverfahren, zugeführt. Die Ausgangsgröße ist dann die Punktgüte 48. Das in Figur 4 exemplarisch gezeigte Verfahren zur Bestimmung der Punktgüte 48 für ein Bildpunkt-Koordinaten-Paar 42 und 43, das einem Modellpunkt n zugeordnet ist, wird auf alle Bildpunkt-Koordinaten-Paare, die in der Look-Up-Tabelle 57 enthalten sind, angewandt, so dass sich für jedes Modell eine Liste der Punktgüten et gibt.

Figur 7 zeigt ein einfaches Beispiel für die Bestimmung der Modellgüte eines Modells aus den Punktgüten. Die Punktgüten für alle N Modellpunkte werden, wie oben bereits anhand von Figur 4 beschrieben, wie folgt berechnet: Im Block 70 wird die Punktgüte für das Bildpunkt-Koordinaten-Paar des Modellpunkts Nr. 1 bestimmt. Analog dazu erfolgt im Block 71 die Bestimmung der Punktgüte für das Bildpunkt-Koordinaten-Paar des Modellpunkts Nr. 2. Block 72 stellt schließlich die die Bestimmung der Punktgüte für das Bildpunkt-Koordinaten-Paar des Modellpunkts Nr. N. Im vorliegenden Beispiel ergibt sich die Modellgüte 74 eines 3D-Modells durch eine Summation 73 seiner Punktgüten.

**Patentansprüche**

1. Verfahren zur Klassifizierung eines Objekts mit einer Stereokamera, die mittels eines ersten und eines zweiten Videosensors (10,12) jeweils ein erstes und ein zweites Bild (23, 25) erzeugt, **dadurch gekennzeichnet, dass** das erste und das zweite Bild (23, 25) in vorgebbaren Bereichen um korrespondierende Bildkoordinaten (24, 26) miteinander zur Klassifizierung des Objekts verglichen werden wobei jedes Paar von korrespondierenden Bildkoordinaten (24, 26) durch Projektion eines Punktes eines dreidimensionalen Modelles, für wenigstens eine Lage und für wenigstens einen Abstand, auf die jeweiligen Videosensoren abgeleitet sind.

2. Verfahren nach Anspruch 1, **dadurch gekennzeichnet, dass** für die einzelnen Vergleiche jeweils ein Gütemaß erzeugt wird, wobei das Objekt in Abhängigkeit von dem Gütemaß klassifiziert wird.

3. Verfahren nach Anspruch 1 oder 2, **dadurch gekennzeichnet, dass** die Modelle für wenigstens zwei Lagen und Abstände in Bezug zur Stereokamera erzeugt werden.

4. Verfahren nach einem der vorhergehenden Ansprüchen, **dadurch gekennzeichnet, dass** die abgeleitete Paren von Korrespondierenden Bildkoordinaten in einer Look-Up-Tabelle gespeichert werden.

5. Verfahren nach Anspruch 2, **dadurch gekennzeichnet, dass** das Gütemaß mittels einer Korrelation ermittelt wird.

**Claims**

1. Method for classifying an object using a stereo camera which produces in each case a first and a second image (23, 25) by means of a first and a second video sensor (10, 12), **characterized in that** the first and the second image (23, 25) are compared with one another in predeterminable areas around corresponding image coordinates (24, 26) in order to classify the object, wherein each pair of corresponding image coordinates (24, 26) is derived via projection of a point of a three-dimensional model, for at least one position and for at least one distance, onto the respective video sensors.

2. Method according to Claim 1, **characterized in that** for the individual comparisons, in each case a quality measure is produced, the object being classified as a function of the quality measure.

3. Method according to Claim 1 or 2, **characterized in that** the models are produced for at least two positions and distances with respect to the stereo camera.

4. Method according to one of the preceding claims, **characterized in that** the derived pairs of corresponding image coordinates are stored in a look-up table.

5. Method according to Claim 2, **characterized in that** the quality measure is ascertained by means of a correlation.

**Revendications**

1. Procédé de classification d'un objet à l'aide d'une caméra stéréoscopique, ayant un premier et un second capteur vidéo (10, 12) donnant à chaque fois une première et une seconde image (23, 25),
**caractérisé en ce que**
la première et la seconde image (23, 25) sont comparées dans des zones prédéfinies pour des coordonnées d'images correspondantes (24, 26) pour classifier l'objet, chaque paire de coordonnées d'images correspondante (24, 26) étant déduite par la projection d'un point d'un modèle tridimensionnel au moins pour la position et au moins pour la distance sur les capteurs vidéo respectifs.

2. Procédé selon la revendication 1,
**caractérisé en ce que**
pour les différentes comparaisons, on génère chaque fois une mesure de qualité et l'objet est classifié selon cette mesure de qualité.

3. Procédé selon la revendication 1 ou 2,
**caractérisé en ce qu'**
on génère les modèles pour au moins deux positions et deux distances par rapport à la caméra stéréoscopique.

4. Procédé selon l'une des revendications précédentes,
**caractérisé en ce que**
les paires déduites de coordonnées d'images correspondantes sont enregistrées dans un tableau de mise à jour.

5. Procédé selon la revendication 2,
**caractérisé en ce qu'**
on détermine la mesure de la qualité par une corrélation.

Fig. 1

Fig. 2

Fig. 3

EP 1 756 748 B1

Bildkoordinaten aus
Look-Up-Tabelle
der Korrespondenzen

$$\bigl(x_l(n), y_l(n)\bigr) \qquad \bigl(x_r(n), y_r(n)\bigr)$$

42      43      45

linkes Kamerabild

40

rechtes Kamerabild

41

Bestimmung von
Messfenstern um
die Koordinaten
im linken und
rechten Bild

46

Bestimmung
einer Güte
durch Vergleich
der Messfenster
(z.B. über
Korrelation)

Punkt-
güte(n)

48

Fig. 4      44      47

Kameramodell
linke Kamera

52

Projektion der
3D-Modellpunkte
in Kamerabildebene

Bildpunkte
(linke Kamera)

$(x_l(i), y_l(i))$

53

3D-Modell

51

Verdeckungsanalyse und
Schreiben in
Look-Up-Tabelle
der Korrespondenzen

Look-Up-Tabelle
der Korrespondenzen

57

56

Kameramodell
rechte Kamera

Projektion der
3D-Modellpunkte
in Kamerabildebene

$(x_r(i), y_r(i))$

55

Bildpunkte
(rechte Kamera)

54

Fig. 5

| Look-Up-Tabelle der Korrespondenzen für 3D-Modell Nr. k | | | |
|---|---|---|---|
| Punkt-Index | 3D-Objektpunkt | Bildpunkt linke Kamera | Bildpunkt rechte Kamera |
| 1 | $\left(x_o(1), y_o(1), z_o(1)\right)$ | $\left(x_l(1), y_l(1)\right)$ | $\left(x_r(1), y_r(1)\right)$ |
| 2 | $\left(x_o(2), y_o(2), z_o(2)\right)$ | $\left(x_l(2), y_l(2)\right)$ | $\left(x_r(2), y_r(2)\right)$ |
| 3 | ... | ... | ... |

Fig. 6

EP 1 756 748 B1

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19932520 A1